# EUROPÄISCHE PATENTANMELDUNG

(11) **EP 4 717 843 A1**
(43) Veröffentlichungstag der Anmeldung: **01.04.2026**
(21) Anmeldenummer: 25199997.5
(22) Anmeldetag: 03.09.2025
(51) Int. Cl.: E04B 1/41, E04B 5/23

(54) **STOPFEN, HOLZ-BETON-VERBUNDELEMENT UND VERFAHREN**

(30) Priorität: 26.09.2024 DE 102024127924
(71) Anmelder: Adolf Würth GmbH & Co. KG, 74653 Künzelsau (DE)
(72) Erfinder: RÖVER, Dennis, 74653 Künzelsau (DE); CERA, Udo, 74523 Schwäbisch Hall (DE)
(74) Vertreter: Patentanwälte Ruff, Wilhelm, Beier, Dauster & Partner mbB

(57) **Zusammenfassung**

Die Erfindung betrifft einen Stopfen zur Verwendung in einem Holz-Beton-Verbundelement, wobei der Stopfen zum Aufsetzen auf den Kopf einer Schraube vorgesehen ist, die zum Einschrauben in ein Holzelement des Holz-Beton-Verbundelements vorgesehen ist, wobei der Stopfen ausgebildet ist, einen Rand eines Schraubenkopfes wenigstens abschnittsweise zu umgreifen und/oder wobei der Stopfen ausgebildet ist, an einer Antriebsausbildung der Schraube anzugreifen.

## Beschreibung

Die Erfindung betrifft einen Stopfen zur Verwendung in einem Holz-Beton-Verbundelement, wobei der Stopfen zum Aufsetzen auf den Kopf einer Schraube vorgesehen ist, die zum Einschrauben in ein Holzelement des Holz-Beton-Verbundelements vorgesehen ist. Die Erfindung betrifft auch ein Holz-Beton-Verbundelement. Die Erfindung betrifft weiter ein Verfahren zum Herstellen eines Holz-Beton-Verbundelements und ein Verfahren zum Rückbauen eines Holz-Beton-Verbundelements.

Holz-Beton-Verbundelemente sind bekannt. Üblicherweise werden Schrauben senkrecht oder schräg in eine Holzdecke eingeschraubt. Daraufhin wird eine Betonschicht auf die Holzdecke ausgebracht, die die Schraubenköpfe der Schrauben vollständig einschließt. Nach dem Verfestigen des Betons dienen die Schrauben dazu, Schubkräfte zwischen der Holzdecke und der Betonschicht zu übertragen. Problematisch bei solchen konventionellen Holz-Beton-Verbundelementen ist, dass diese nicht ohne weiteres so recycelt werden können, dass die einzelnen Bestandteile, insbesondere die Metallschrauben, der Beton der Betonschicht und die Holzdecke in einfacher Weise getrennt werden können.

Mit der Erfindung sollen ein Stopfen, ein Holz-Beton-Verbundelement, ein Verfahren zum Herstellen eines Holz-Beton-Verbundelements und ein Verfahren zum Rückbauen eines Holz-Beton-Verbundelements verbessert werden.

Erfindungsgemäß ist hierzu ein Stopfen mit den Merkmalen von Anspruch 1, ein Holz-Beton-Verbundelement mit den Merkmalen von Anspruch 13, ein Verfahren zum Herstellen eines Holz-Beton-Verbundelements mit den Merkmalen von Anspruch 18 und ein Verfahren zum Rückbauen eines Holz-Beton-Verbundelements mit den Merkmalen von Anspruch 19 vorgesehen. Vorteilhafte Weiterbildungen der Erfindung ergeben sich aus den Unteransprüchen.

Bei einem Stopfen zur Verwendung in einem Holz-Beton-Verbundelement, wobei der Stopfen zum Aufsetzen auf den Kopf einer Schraube vorgesehen ist, die zum Einschrauben in ein Holzelement des Holz-Beton-Verbundelements vorgesehen ist, ist vorgesehen, dass der Stopfen ausgebildet ist, einen Rand des Schraubenkopfes wenigstens abschnittsweise zu umgreifen und/oder an einer Antriebsausbildung der Schraube anzugreifen.

Wenn der Stopfen ausgebildet ist, einen Rand eines Schraubenkopfs wenigstens abschnittsweise zu umgreifen, liegt der Stopfen dann abschnittsweise an einer Unterseite des Schraubenkopfs an und ist dadurch am Schraubenkopf fixiert. Im Rahmen der Erfindung ist es sinnvoll, dass der Großteil der Unterseite des Schraubenkopfs frei bleibt und infolgedessen unmittelbar von der Betonschicht berührt wird. Auf diese Weise ist eine sichere Übertragung von Schubkräften zwischen dem Holzelement und der Betonschicht möglich, wobei diese Übertragung von Schubkräften hauptsächlich über die Unterseite des Schraubenkopfs bewirkt wird, an dem die Betonschicht anliegt.

In Weiterbildung der Erfindung weist der Stopfen eine Ausnehmung mit wenigstens abschnittsweise hinterschnittenem Rand zum Aufnehmen des Rands des Schraubenkopfs auf.

Der Stopfen besteht vorteilhafterweise aus flexiblem und/oder elastischem Material. Der Stopfen kann mit seinem abschnittsweise hinterschnittenen Rand auf den Rand des Schraubenkopfs aufgerastet werden. Wenn der Stopfen den Rand des Schraubenkopfs umgreift, ist dadurch gleichzeitig sichergestellt, dass die Schraube zusammen mit dem Stopfen oder nach Entfernen des Stopfens aus der Betonschicht herausgeschraubt werden kann. Denn die durch den Stopfen gebildete Vertiefung in der Betonschicht, die von der Oberseite der Betonschicht ausgeht, weist dann einen Innendurchmesser auf, der geringfügig größer oder zumindest gleich groß ist wie ein Außendurchmesser des Schraubenkopfs der Schraube.

Auch dann, wenn der Stopfen ausgebildet ist, an einer Antriebsausbildung der Schraube anzugreifen, kann der Stopfen sicher am Schraubenkopf befestigt werden. Im Rahmen der Erfindung kann der Stopfen sowohl einen Rand eines Schraubenkopfs wenigstens abschnittsweise umgreifen als auch an einer Antriebsausbildung der Schraube angreifen. Beispielsweise ist der Stopfen mit einem Zapfen zum Einstecken in eine Antriebsausbildung am Schraubenkopf versehen oder der Stopfen weist einen Ring zum Aufstecken auf einen Außensechskant einer Schraube auf.

In Weiterbildung der Erfindung weist der Stopfen in einer Wand der Ausnehmung eine umlaufende Sollbruchkante auf.

Dadurch kann das Entfernen des Stopfens, wenn dieser mit seiner Umfangswand in die Betonschicht eingebettet ist, erleichtert werden. Der Stopfen reißt beim Entfernen vom Schraubenkopf an der Sollbruchkante in zwei Teile oder zwei Abschnitte. Der oberhalb des der Sollbruchkante befindliche Abschnitt kann leicht aus der Betonschicht entfernt werden, der unterhalb der Sollbruchkante befindliche Abschnitt bleibt in der Betonschicht zurück und kann beispielsweise nach dem Ausdrehen der Schraube entfernt werden.

In Weiterbildung der Erfindung ist die Sollbruchkante benachbart zu dem hinterschnittenen Rand zum Aufnehmen des Rands des Schraubenkopfes angeordnet.

Dadurch kann der größtmögliche Teil des Stopfen beim Entfernen aus der Betonschicht entfernt werden und nur der unterhalb des Schraubenkopfes und eventuell noch radial außerhalb des Rands des Schraubenkopfes befindliche Abschnitt des Stopfens verbleibt in der Betonschicht.

In Weiterbildung der Erfindung weist der Stopfen einen Zapfen auf, der in eine Antriebsausbildung der Schraube eingesteckt werden kann.

Auf diese Weise kann der Stopfen in sehr einfacher Weise an einer Schraube mit einem Innensechskant oder einem Innenvielrund befestigt werden.

Ein solcher Zapfen kann auch sicherstellen, dass der beim Aufbringen der Betonschicht noch flüssige Beton nicht in die Antriebsausbildung der Schraube fließt und diese dadurch verschmutzt und das beim Rückbau des Holz-Beton-Verbundelements erfolgende Herausschrauben der Schraube erschwert oder unmöglich macht.

In Weiterbildung der Erfindung weist der Stopfen eine Länge auf, die so bemessen ist, dass sich der Stopfen im fertiggestellten Holz-Beton-Verbundelement bis zu einer Oberseite einer Betonschicht des Holz-Beton-Verbundelements erstreckt.

Indem sich der Stopfen im fertiggestellten Holz-Beton-Verbundelement bis zu einer Oberseite einer Betonschicht des Holz-Beton-Verbundelements erstreckt, kann der Stopfen am fertiggestellten Holz-Beton-Verbundelement sicher erkannt werden. Wenn das Holz-Beton-Verbundelement rückgebaut werden soll, ist dadurch die Lage der Schrauben leicht zu erkennen. Entweder vor dem Entfernen des Stopfens oder noch mit dem an der Schraube befestigten Stopfen ist es dann möglich, die Schraube aus dem Holzelement und der Betonschicht herauszudrehen, um dadurch die Möglichkeit zu haben, beim Rückbau eines Holz-Beton-Verbundelements Holzelemente, die Betonschicht und die Schrauben in einfacher Weise zu trennen und getrennt entsorgen zu können.

In Weiterbildung der Erfindung ist der Stopfen einstückig und aus elastischem Material, insbesondere Gummi oder gummiartiges Material, ausgebildet.

Ein solcher einstückiger und aus elastischem Material bestehender Stopfen kann beim Rückbau eines Holz-Beton-Verbundelements in sehr einfacher Weise aus der Betonschicht entfernt werden. Dies deshalb, da die Elastizität des Stopfens es ermöglicht, dass dieser sich von der Betonschicht löst und herausgezogen werden kann. Dies gilt auch dann, wenn die Schraube zusammen mit dem Stopfen aus der verfestigten Betonschicht entfernt wird.

In Weiterbildung der Erfindung ist der Stopfen zylindrisch oder kegelstumpfförmig ausgebildet.

Vorteilhafterweise weist der Stopfen einen Kreisquerschnitt auf und ist somit kreiszylindrisch oder kreiskegelstumpfförmig ausgebildet. Ein kegelstumpfförmiger Stopfen schafft eine Ausnehmung in der Betonschicht, die sich vom Schraubenkopf aus bis zur Oberseite der Betonschicht erweitert. Dies erleichtert das Herausdrehen der Schraube beim Rückbau eines Holz-Beton-Verbundelements.

In Weiterbildung der Erfindung ist eine Oberseite des Stopfens schräg zu einer Unterseite angeordnet, insbesondere weist der Stopfen die Form eines schräg angeschnittenen Kreiszylinders oder eines schräg angeschnittenen Kreiskegelstumpfs auf.

Auf diese Weise ist es möglich, dass auch schräg in ein Holzelement eines Holz-Beton-Verbundelements eingedrehte Schrauben mit einem Stopfen versehen werden, der den Rückbau des Holz-Beton-Verbundelements stark vereinfacht, da die Schrauben in sehr einfacher Weise aus dem Holzelement und der Betonschicht herausgedreht werden können, und dessen Oberseite bündig mit der Oberseite der Betonschicht angeordnet ist.

In Weiterbildung der Erfindung weist der Stopfen eine Durchgangsöffnung oder eine Ausnehmung auf, wobei in einem auf eine Schraube aufgesetzten Zustand des Stopfens eine Antriebsausbildung der Schraube durch die Durchgangsöffnung bzw. durch die Ausnehmung zugänglich ist.

Auf diese Weise kann die Schraube mit aufgesetztem Stopfen eingeschraubt oder ausgeschraubt werden, was die Handhabung erheblich erleichtert. Beispielsweise können Schrauben bereits mit aufgesetztem Stopfen ausgeliefert werden, so dass auf der Baustelle das Aufsetzen des Stopfens entfallen kann.

In Weiterbildung der Erfindung ist ein Stöpsel oder eine Kappe vorgesehen, um die Durchgangsöffnung oder die Ausnehmung zu verschließen.

Nach dem Eindrehen der Schraube in das Holzelement kann dadurch die Durchgangsöffnung oder die Ausnehmung abgedichtet werden, um zu verhindern, dass beim Aufbringen der Betonschicht flüssiger Beton oder sonstige Verunreinigungen in die Antriebsausbildung der Schraube gelangen.

In Weiterbildung der Erfindung ist eine Eingangsöffnung der Durchgangsöffnung oder der Ausnehmung mittels einer Sollbruchstelle oder einer Membran verschlossen.

Wird der Stopfen beispielsweise nach dem Eindrehen der Schraube aufgesetzt, ist durch die Sollbruchstelle oder die Membran sichergestellt, dass beim Aufbringen der Betonschicht kein flüssiger Beton in die Antriebsausbildung der Schraube gelangt und diese dadurch möglicherweise unbrauchbar macht. Die Sollbruchstelle ist in einer durchgehenden Oberseite des Stopfens angeordnet beziehungsweise die Membran ist Teil einer durchgehenden Oberseite des Stopfens. Erst dann, wenn die Schraube herausgeschraubt oder noch weiter eingeschraubt werden soll, wird die Membran oder die Sollbruchstelle durchgedrückt und dabei abschnittsweise zerstört, beispielsweise mit einem Schrauberbit.

In Weiterbildung der Erfindung ist der Stopfen als Hohlkörper aufgebaut.

Auf diese Weise wird nur wenig Material für die Herstellung des Stopfens benötigt.

In Weiterbildung der Erfindung geht von einer Oberseite des Stopfens wenigstens eine Markierungsfahne oder ein Griffstück aus, die sich im eingebauten Zustand über eine Oberseite der Betonschicht hinaus erstreckt.

Auf diese Weise sind die Stopfen am fertiggestellten Holz-Beton-Verbundelement noch leichter zu erkennen. Denn selbst dann, wenn eine Oberseite des Stopfens von einer dünnen Betonschicht bedeckt sein sollte, beispielsweise weil die vorgesehene Dicke der Betonschicht geringfügig überschritten wurde, ragt immer noch die Markierungsfahne oder das Griffstück über die Oberseite der Betonschicht hinaus. Das Griffstück, beispielsweise eine Griffzapfen oder eine Griffleiste, erleichtert auch das Abnehmen des Stopfens, wenn das Holz-Beton-Verbundelement rückgebaut werden soll.

Die der Erfindung zugrunde liegende Aufgabe wird auch durch ein Holz-Beton-Verbundelement, insbesondere eine Holz-Beton-Verbunddecke, gelöst, das ein Holzelement, wenigstens eine in das Holzelement eingedrehte Schraube, einen auf einen Schraubenkopf der Schraube aufgesetzten Stopfen und eine Betonschicht aufweist, die auf einer Oberseite des Holzelements aufliegt und die sich über einen Kopf der Schraube hinaus erstreckt, wobei an dem Kopf der Schraube der zylindrische oder kegelstumpfförmige Stopfen befestigt ist, wobei ein Außendurchmesser des Stopfens bis zu einer Oberseite des Stopfens größer ist als oder gleich groß ist wie ein Außendurchmesser des Schraubenkopfs und wobei sich der Stopfen bis zu einer Oberseite der Betonschicht erstreckt.

Idealerweise ist die Oberseite des Stopfens bündig zur Oberseite der Betonschicht angeordnet. Das Holz-Beton-Verbundelement kann dadurch in üblicher Weise mit einem Bodenbelag versehen werden und vor allem in sehr einfacher Weise rückgebaut werden, indem, vor oder nach dem Entfernen der Stopfen, die Schrauben aus dem Holzelement und der Betonschicht ausgeschraubt werden, um die Schrauben, die Stopfen, das Holzelement und die Betonschicht getrennt entsorgen bzw. recyceln zu können.

In Weiterbildung der Erfindung geht von einer Oberseite des Stopfens, die von einem Kopf der Schraube abgewandt ist, eine Markierungsfahne oder ein Griffstück aus, die beziehungsweise das sich über eine Oberseite der Betonschicht hinaus erstreckt.

Am fertiggestellten Holz-Beton-Verbundelement kann dadurch die Lage der Schrauben in sehr einfacher Weise festgestellt werden, selbst dann, wenn die Betonschicht die Oberseite des Stopfens bedecken sollte, weil die Betonschicht geringfügig dicker hergestellt wurde als vorgesehen. Ein Griffstück erleichtert das Entfernen der Stopfen erheblich. Beispielsweise wird das Griffstück von Hand oder mit einer Zange ergriffen und der Stopfen kann dann in sehr einfacher Weise entfernt werden, so dass die Antriebsausbildung der Schraube von der Oberseite der Betonschicht her zugänglich ist.

In Weiterbildung der Erfindung weist der Stopfen eine Durchgangsöffnung oder eine Ausnehmung auf, wobei durch die Durchgangsöffnung oder die Ausnehmung eine Antriebsausbildung der Schraube zugänglich ist und wobei eine Eingangsöffnung der Durchgangsöffnung oder Ausnehmung, die in der Oberseite des Stopfens angeordnet ist, bündig zu einer Oberseite der Betonschicht angeordnet ist.

Durch eine solche Durchgangsöffnung oder Ausnehmung kann die Antriebsausbildung der Schraube erreicht werden, beispielsweise mit einem Schrauberbit. Das Eindrehen und Ausdrehen der Schraube ist dadurch problemlos auch bei aufgesetztem Stopfen möglich.

In Weiterbildung der Erfindung ist die Eingangsöffnung der Durchgangsöffnung oder Ausnehmung mittels einer Kappe oder einem Stöpsel verschlossen.

Auf diese Weise kann sichergestellt werden, dass beim Aufbringen der Betonschicht der flüssige Beton nicht in die Antriebsausbildung der Schraube läuft, was das spätere Ausschrauben der Schraube unmöglich machen könnte.

In Weiterbildung der Erfindung ist die Eingangsöffnung der Durchgangsöffnung oder Ausnehmung mit einer Sollbruchstelle oder einer Membran versehen.

Die Eingangsöffnung der Durchgangsöffnung oder Ausnehmung ist dadurch sicher verschlossen und nach dem Aufsetzen des Stöpsels auf den Schraubenkopf kann sichergestellt werden, dass auch beim Aufbringen der Betonschicht kein flüssiger Beton in die Antriebsausbildung der Schraube gelangt.

Die der Erfindung zugrunde liegende Aufgabe wird auch durch ein Verfahren zum Herstellen eines Holz-Beton-Verbundelements gelöst, bei dem folgende Schritte vorgesehen sind: Eindrehen wenigstens einer Schraube in eine Oberseite eines Holzelements, insbesondere einer Holzdecke, des Holz-Beton-Verbundelements, Aufsetzen eines Stopfens auf einen Schraubenkopf der wenigstens einen Schraube und Aufbringen einer Betonschicht auf eine Oberseite des Holzelements, so dass sich die Betonschicht bis zu einer Oberseite des Stopfens erstreckt.

Der Stopfen kann dabei vor dem Eindrehen der Schraube auf den Schraubenkopf aufgesetzt werden, der Stopfen kann aber auch nach dem Eindrehen der Schraube auf den Schraubenkopf aufgesetzt werden. Der Stopfen kann nach dem Verfestigen der Betonschicht problemlos entfernt werden, so dass dadurch eine Antriebsausbildung im Schraubenkopf von der Oberseite der Betonschicht her zugänglich ist. Beispielsweise besteht der Stopfen aus elastischem Material und kann dadurch leicht aus der verfestigten Betonschicht entfernt werden. Eine kegelstumpfförmige Ausbildung des Stopfens, so dass sich der Stopfen vom Schraubenkopf bis zu seiner Oberseite hin erweitert, kann das Entfernen des Stopfens ebenfalls erleichtern.

Die der Erfindung zugrunde liegende Aufgabe wird auch durch ein Verfahren zum Rückbauen eines Holz-Beton-Verbundelements gelöst, bei dem folgende Schritte vorgesehen sind: Ausdrehen wenigstens einer Schraube aus dem Holzelement des Holz-Beton-Verbundelements nach dem Entfernen des Stopfens aus der Betonschicht und von dem Schraubenkopf der Schraube, Ausdrehen der wenigstens einen Schraube aus dem Holzelement und gleichzeitiges Entfernen des Stopfens aus der Betonschicht oder Ausdrehen der wenigstens einen Schraube durch die Durchgangsöffnung des Stopfens hindurch und nachfolgend Entfernen des Stopfens aus der Betonschicht und nach dem Ausdrehen der Schraube und dem Entfernen des Stopfens aus der Betonschicht, Trennen der Betonschicht von dem Holzelement.

Mit dem erfindungsgemäßen Verfahren kann ein Holz-Beton-Verbundelement in sehr einfacher Weise so recycelt werden, dass Holz, Beton, die Stopfen und die Schrauben getrennt vorliegen und infolgedessen auch getrennt recycelt werden können.

Weitere Merkmale und Vorteile der Erfindung ergeben sich aus der Beschreibung bevorzugter Ausführungsformen der Erfindung im Zusammenhang mit den Zeichnungen. Einzelmerkmale der unterschiedlichen, dargestellten und beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine Draufsicht und eine Schnittansicht eines Stopfens gemäß einer ersten Ausführungsform der Erfindung zusammen mit einer abschnittsweise dargestellten Schraube,
- Fig. 2: eine Draufsicht und eine Schnittansicht eines Stopfens gemäß einer zweiten Ausführungsform der Erfindung zusammen mit einer abschnittsweise dargestellten Schraube,
- Fig. 3: eine Draufsicht und eine Schnittansicht eines Stopfens gemäß einer dritten Ausführungsform der Erfindung zusammen mit einer abschnittsweise dargestellten Schraube,
- Fig. 4: eine Draufsicht und eine Schnittansicht eines Stopfens gemäß einer vierten Ausführungsform der Erfindung zusammen mit einer abschnittsweise dargestellten Schraube,
- Fig. 5: eine Draufsicht und eine Schnittansicht eines Stopfens gemäß einer fünften Ausführungsform der Erfindung zusammen mit einer abschnittsweise dargestellten Schraube,
- Fig. 6: eine Draufsicht und eine Schnittansicht eines Stopfens gemäß einer sechsten Ausführungsform der Erfindung zusammen mit einer abschnittsweise dargestellten Schraube,
- Fig. 7: eine Draufsicht und eine Schnittansicht eines Stopfens gemäß einer siebten Ausführungsform der Erfindung zusammen mit einer abschnittsweise dargestellten Schraube,
- Fig. 8: eine Draufsicht und eine Schnittansicht eines Stopfens gemäß einer achten Ausführungsform der Erfindung zusammen mit einer abschnittsweise dargestellten Schraube,
- Fig. 9: eine Draufsicht und eine Schnittansicht eines Stopfens gemäß einer neunten Ausführungsform der Erfindung zusammen mit einer abschnittsweise dargestellten Schraube,
- Fig. 10: eine Draufsicht und eine Schnittansicht eines Stopfens gemäß einer zehnten Ausführungsform der Erfindung zusammen mit einer abschnittsweise dargestellten Schraube,
- Fig. 11: eine Draufsicht und eine Schnittansicht eines Stopfens gemäß einer elften Ausführungsform der Erfindung zusammen mit einer abschnittsweise dargestellten Schraube,
- Fig. 12: eine Draufsicht und eine Schnittansicht eines Stopfens gemäß einer zwölften Ausführungsform der Erfindung zusammen mit einer abschnittsweise dargestellten Schraube,
- Fig. 13: eine Draufsicht und eine Schnittansicht eines Stopfens gemäß einer dreizehnten Ausführungsform der Erfindung zusammen mit einer abschnittsweise dargestellten Schraube,
- Fig. 14: den Stopfen der Fig. 3 in einer Schnittansicht vor dem Aufsetzen auf den Schraubenkopf einer Schraube,
- Fig. 15: den Stopfen der Fig. 14 nach dem Aufsetzen auf den Schraubenkopf der Schraube,
- Fig. 16: den Stopfen der Fig. 15 nach dem Einführen eines Schraubwerkzeugs in den Stopfen,
- Fig. 17: verschiedene Schrauben, die für ein erfindungsgemäßes Holz-Beton-Verbundelement geeignet sind,
- Fig. 18: den Stopfen der Fig. 16 in einem erfindungsgemäßen Holz-Beton-Verbundelement, nachdem das Schraubwerkzeug in die Antriebsausbildung der Schraube eingeführt wurde,
- Fig. 19: den Stopfen und das Holz-Beton-Verbundelement der Fig. 18, nachdem mit dem Schraubwerkzeug die Schraube bereits ein Stück weit ausgeschraubt wurde,
- Fig. 20, 21 und 22: verschiedene Schritte beim Herstellen eines erfindungsgemäßen Holz-Beton-Verbundelements,
- Fig. 23: eine erste Möglichkeit beim Rückbau eines erfindungsgemäßen Holz-Beton-Verbundelements,
- Fig. 24: eine zweite Möglichkeit beim Rückbau eines erfindungsgemäßen Holz-Beton-Verbundelements,
- Fig. 25: eine Schraube für ein Holz-Beton-Verbundelement und
- Fig. 26: eine weitere Schraube für ein Holz-Beton-Verbundelement.

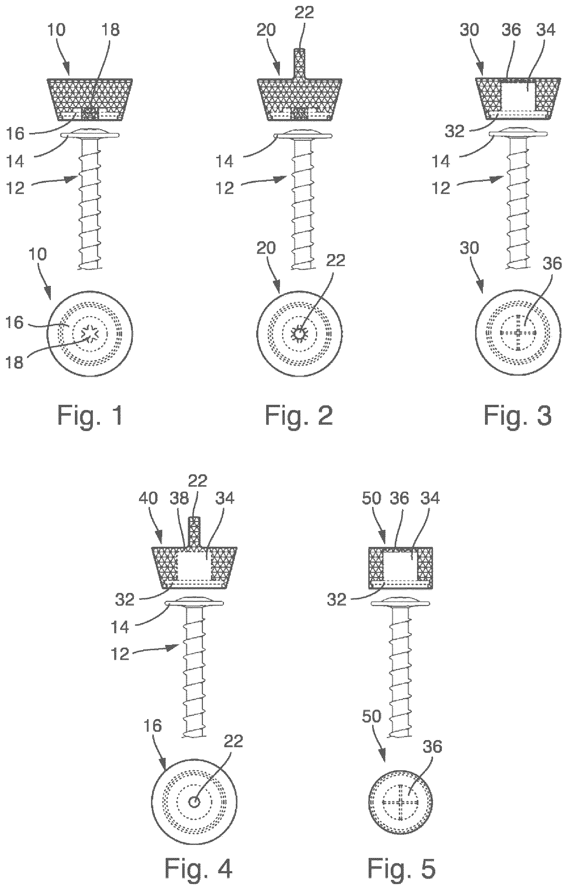

Fig. 1 zeigt in einer Draufsicht einen erfindungsgemäßen Stopfen 10 gemäß einer ersten Ausführungsform der Erfindung sowie den Stopfen 10 auch in einer Schnittansicht. Unterhalb der Schnittansicht des Stopfens 10 ist abschnittsweise eine Schraube 12 dargestellt, die einen Schraubenkopf 14 aufweist, auf den der Stopfen 10 aufgesetzt werden kann.

Um den Stopfen 10 auf den Schraubenkopf 14 aufsetzen zu können, ist der Stopfen 10 an seiner Unterseite mit einer Ausnehmung 16 versehen, die stufenförmig ausgebildet ist. Eine erste Stufe der Ausnehmung weist einen Innendurchmesser auf, der kleiner ist als ein Außendurchmesser des Rands des Schraubenkopfs 14. Eine zweite Stufe weist einen Innendurchmesser auf, der dem Außendurchmesser des Rands des Schraubenkopfes 14 entspricht oder geringfügig kleiner ist. Die erste Stufe bildet die Öffnung der Ausnehmung 16, die zweite Stufe schließt an die erste Stufe an. Durch die erste Stufe und die zweite Stufe ist dadurch ein Hinterschnitt gebildet bzw. ein umlaufender, radial nach innen ragender Vorsprung an der Unterseite des Stopfens 10. Eine dritte Stufe der Ausnehmung weist einen deutlich kleineren Innendurchmesser auf als die erste und die zweite Stufe und ist dafür vorgesehen, eine nach oben gewölbte Oberseite des Schraubenkopfs aufzunehmen. Vom Grund der Ausnehmung 16 geht ein Zapfen 18 aus, der sich bis zu einer Eingangsöffnung der Ausnehmung in der Unterseite des Stopfens 10 erstreckt. Dieser Zapfen 18 hat eine Außenkontur, die auf die Innenkontur der Antriebsausbildung im Schraubenkopf 14 abgestimmt ist. Bei der dargestellten Ausführungsform weist der Zapfen 18 die Form eines Außenvielrunds auf, der in den Innenvielrund der Antriebsausbildung im Schraubenkopf 14 eingesteckt werden kann.

Wenn der Stopfen ausgehend von der in Fig. 1 dargestellten Position oberhalb der Schraube in Richtung auf den Schraubenkopf 14 zubewegt wird, schnappt der radial nach innen vorspringende Rand der Ausnehmung 16 über den Rand des Schraubenkopfs 14. Der Rand des Schraubenkopfs 14 ist dann in der zweiten Stufe der Ausnehmung 16 aufgenommen. Mit dem radial nach innen vorspringenden Rand an der Unterseite des Stopfens 10 wird der Rand des Schraubenkopfs 14 umgriffen, so dass also der Hinterschnitt zwischen der ersten Stufe und der zweiten Stufe der Ausnehmung 16 an der Unterseite des Schraubenkopfs anliegt. Bereits dadurch ist der Stopfen 10 sicher an dem Schraubenkopf 14 befestigt. Gleichzeitig wird beim Aufsetzen des Stopfens 10 auf den Schraubenkopf 14 der Zapfen 18 in die Antriebsausbildung im Schraubenkopf 14 eingedrückt. Dadurch wird der Stopfen zusätzlich am Schraubenkopf 14 gesichert. Die Draufsicht auf den Stopfen 10 der Fig. 1 zeigt die verschiedenen Stufen der Ausnehmung 16 mit gestrichelten Linien sowie auch den Zapfen 18 in gestrichelten Linien.

In der Schnittansicht in Fig. 1 ist zu erkennen, dass die Oberseite des Stopfens 10 eben ausgebildet ist. Nach dem Aufsetzen des Stopfens auf den Schraubenkopf 14 wird beim Herstellen eines Holz-Beton-Verbundelements eine flüssige Betonschicht auf das Holzelement aufgebracht, so dass eine Oberseite der Betonschicht bündig mit einer Oberseite des Stopfens 10 angeordnet ist. Nach dem Verfestigen des Betons ist dadurch die Oberseite des Stopfens 10 in der Betonschicht sichtbar. Zum Entfernen des Stopfens kann dieser in einfacher Weise aus der Betonschicht und vom Schraubenkopf 14 entfernt werden. Der Stopfen besteht aus Gummi oder gummiartigem Material und ist dadurch elastisch. Dies erleichtert das Aufrasten des Stopfens 10 auf den Rand des Schraubenkopfs 14 und ermöglicht auch das einfache Entfernen des Stopfens 10 vom Schraubenkopf 14. Das Entfernen des Stopfens 10 aus der Betonschicht ist auch dadurch erleichtert, dass der Stopfen 10 die Form eines Kreiskegelstumpfes hat und sich von der in Fig. 1 in der Schnittansicht unten dargestellten Unterseite bis zur Oberseite hin erweitert. Nach dem Entfernen des Stopfens 10 ist in der Betonschicht somit eine kegelstumpfförmige Vertiefung zugänglich. Durch diese kegelstumpfförmige Vertiefung kann die Antriebsausbildung der Schraube 12 im Schraubenkopf 14 mit einem Schraubwerkzeug leicht erreicht werden und die Schraube 12 kann dann aus dem Holzelement und der Betonschicht ausgedreht werden. Wesentlich ist auch, dass der Stopfen 10 verhindert, dass beim Aufbringen einer Betonschicht flüssiger Beton in die Antriebsausbildung der Schraube 10 gelangt und dadurch das Ausdrehen der Schraube 14 verhindert oder erschwert.

Fig. 2 zeigt eine Draufsicht und eine Schnittansicht eines Stopfens 20 gemäß einer weiteren Ausführungsform der Erfindung. Der Stopfen 20 ist in weiten Teilen gleich aufgebaut wie der Stopfen 10 der Fig. 1 und nachfolgend werden lediglich die vom Stopfen 10 unterschiedlichen Merkmale des Stopfens 20 beschrieben.

Der Stopfen 20 weist auf seiner Oberseite einen Griffabschnitt 22 oder ein Griffstück auf, der von der Oberseite des Stopfens 20 aus nach oben abragt. Der Griffabschnitt 22 ist mittig zur Oberseite des Stopfens 20 angeordnet und weist die Form eines kreiszylindrischen Vorsprungs auf.

In einem fertiggestellten Holz-Beton-Verbundelement ist eine Oberseite der Betonschicht bündig zu einer Oberseite des Stopfens 20 angeordnet. Der Griffabschnitt 22 ragt dann über die Oberseite der Betonschicht hinaus. An dem Griffabschnitt 22 kann dann der Stopfen 20 ergriffen werden und in einfacher Weise aus der Betonschicht und vom Schraubenkopf 14 der Schraube 12 entfernt werden. Der Griffabschnitt 22 ist etwa so lang wie der Abstand von der Unterseite des Stopfens 20 bis zur Oberseite des Stopfens 20.

Fig. 3 zeigt einen Stopfen 30 gemäß einer dritten Ausführungsform der Erfindung in einer Draufsicht und in einer Schnittansicht. Der Stopfen 30 ist als Hohlkörper aufgebaut und weist eine von der Unterseite des Stopfens ausgehende zweistufige Ausnehmung auf, deren beide Stufen gleich ausgebildet sind wie die ersten beiden Stufen der Ausnehmung 16 des Stopfens 10 der Fig. 1. Mit dieser Ausnehmung 32 kann, wie anhand der Fig. 1 erläutert wurde, der Stopfen 30 auf den Rand des Kopfs 14 der Schraube 12 aufgesetzt werden.

Die Ausnehmung 32 setzt sich in einer weiteren, zylindrischen Ausnehmung 34 fort, die einen kleineren Durchmesser aufweist als die Ausnehmung 32. Die Ausnehmung 34 geht bis kurz unter die Oberseite des Stopfens 30 und endet an einer Membran 36, die, siehe die Draufsicht der Fig. 3, mit einer in der Draufsicht gestrichelt eingezeichneten Sollbruchstelle versehen ist. Die Sollbruchstelle ist mittels zwei kreuzförmig angeordneten Linien realisiert, in denen die Materialstärke der Membran 36 wesentlich reduziert ist.

Der Stopfen 30 der Fig. 3 wird erst nach dem Einschrauben der Schraube 12 in ein Holzelement auf den Rand des Schraubenkopfs 14 aufgerastet. Der Stopfen 30 sitzt dadurch dicht auf dem Rand des Schraubenkopfs 14 und auch durch die Membran 36 kann beim Herstellen der Betonschicht kein flüssiger Beton in den Hohlraum 34 eindringen, da die Unterseite dieser Ausnehmung 34 durch den Schraubenkopf 14 verschlossen ist und die Oberseite durch die Membran 36. Die Betonschicht wird so aufgebracht, dass sie sich bis zur Oberseite des Stopfens 30 erstreckt, dass also die Oberseite des Stopfens 30 und damit auch die Oberseite der Membran 36 fluchtend bzw. bündig zu der Oberseite der Betonschicht angeordnet sind.

Soll die Schraube 12 beim Rückbau eines Holz-Beton-Verbundelements herausgeschraubt werden, wird die Membran 36 mit einem Schraubwerkzeug durchstoßen. Das Schraubwerkzeug kann dann in die Antriebsausbildung im Schraubenkopf 14 eingreifen. Die Schraube 14 kann dann zusammen mit dem Stopfen 30 aus dem Holzelement sowie auch aus der Betonschicht herausgeschraubt werden. Die kegelstumpfförmige Gestaltung des Stopfens 30, der sich von seiner Unterseite bis zu seiner Oberseite erweitert, erleichtert das Herausschrauben der Schraube 12 zusammen mit dem Stopfen 30 aus der Betonschicht.

Fig. 4 zeigt einen Stopfen 40 in einer Draufsicht und einer Schnittansicht. Der Stopfen 40 weist, wie der Stopfen 30 der Fig. 3, die Ausnehmung 32 auf, die einen Hinterschnitt ausbildet und mit der der Stopfen 40 auf den Schraubenkopf 14 der Schraube 12 aufgerastet wird. An die Ausnehmung 32 schließt sich, wie bei dem Stopfen 30 der Fig. 3, der Hohlraum 36 an. Der Hohlraum 36 ist zur Oberseite des Stopfens 40 hin verschlossen, allerdings nicht mit einer Membran, sondern mittels einer Decke 38, die bündig mit der Oberseite des Stopfens 40 angeordnet ist. Konzentrisch zur Oberseite des Stopfens 40 ragt aus der Decke 38 ein zylindrischer Griffabschnitt 22 heraus, der bereits anhand des Stopfens 20 der Fig. 2 erläutert wurde.

Der Stopfen 40 wird nach dem Einschrauben der Schraube 12 in ein Holzelement auf den Rand des Schraubenkopfs 14 aufgerastet. Vor dem Herausdrehen der Schraube aus dem Holzelement und der Betonschicht muss der Stopfen 40 abgenommen werden, um die Antriebsausbildung im Schraubenkopf 14 zu erreichen. Die Kegelstumpfform des Stopfens 40 erleichtert das Herausnehmen des Stopfens 40 aus der Betonschicht.

Fig. 5 zeigt einen Stopfen 50 gemäß einer fünften Ausführungsform der Erfindung. Der Stopfen 50 weist eine zylindrische Form auf, genauer eine Kreiszylinderform. Der Stopfen 50 ist an seiner Unterseite mit der stufenförmigen Ausnehmung 32 versehen, die bereits anhand des Stopfens 40 der Fig. 4 erläutert wurde. Die Ausnehmung 32 wird, wie bei dem Stopfen 40, durch die Ausnehmung 34 fortgesetzt. Die Ausnehmung 34 ist zur Oberseite des Stopfens 50 hin mit einer Membran 36 verschlossen, deren Aufbau und Funktion bereits anhand des Stopfens 30 der Fig. 3 erläutert wurde.

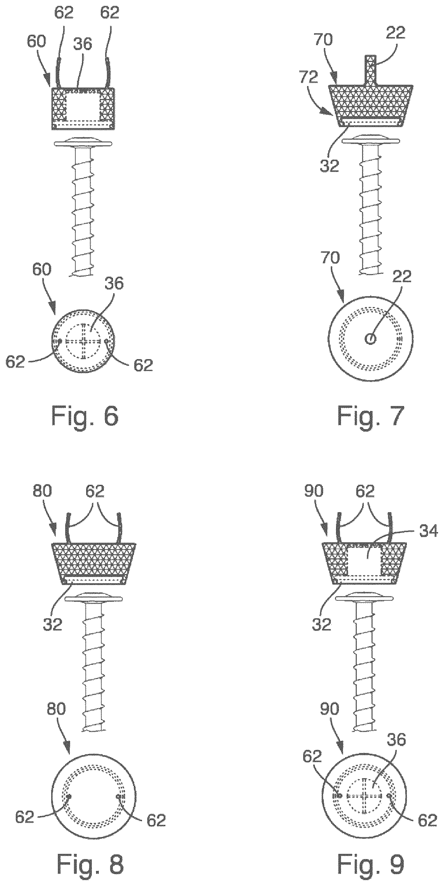

Fig. 6 zeigt einen Stopfen 60 gemäß einer sechsten Ausführungsform der Erfindung in einer Draufsicht und in einer Schnittansicht. Der Stopfen 60 ist sehr ähnlich zum Stopfen 50 der Fig. 5 aufgebaut und es werden lediglich die vom Stopfen 50 unterschiedlichen Merkmale erläutert.

Von der Oberseite des Stopfens 60 gehen von einem Bereich radial außerhalb der Membran 36 zwei Markierungsfahnen 62 aus. Die Markierungsfahnen 62 sind aus elastischem Material hergestellt, beispielsweise Gummi oder gummiartiges Material, wie der übrige Stopfen 60 und sind einstückig mit dem Stopfen 60 hergestellt. Bei einem fertiggestellten Holz-Beton-Verbundelement ist eine Oberseite der Betonschicht bündig mit der Oberseite des Stopfens 60. Die Markierungsfahnen 62 ragen über die Oberseite der Betonschicht hinaus und können dadurch leicht erkannt werden. Dies gilt auch dann, wenn sich die Betonschicht geringfügig über die Oberseite des Stopfens 60 hinaus erstrecken sollte. Auch in diesem Fall ragen die Markierungsfahnen 62, die etwa so lang sind wie der Abstand von der Unterseite des Stopfens 60 bis zur Oberseite des Stopfens 60, über die Betonschicht hinaus.

Fig. 7 zeigt einen Stopfen 70 gemäß einer siebten Ausführungsform der Erfindung. Der Stopfen 70 weist die Ausnehmung 32 auf, die einen Hinterschnitt bildet und die bereits anhand des Stopfens 30 der Fig. 3 erläutert wurde. Mit Ausnahme der Ausnehmung 32 ist der Stopfen 70 aus Vollmaterial, beispielsweise Gummi oder gummiartiges Material, ausgebildet. Von einer Oberseite des Stopfens 70 erstreckt sich der Griffabschnitt 22, der bereits anhand des Stopfens 20 der Fig. 2 erläutert wurde. Eine gestrichelte Linie deutet in Fig. 7 die Lage einer Sollbruchkante 72 an. Die umlaufende Sollbruchkante 72 ist in der Umfangswand der Ausnehmung 32 und angrenzend an den hinterschnittenen Rand der Ausnehmung 32 angeordnet. Das Material des Stopfens 70 ist im Bereich der Sollbruchkante 72 in geeigneter Weise geschwächt, beispielsweise sehr dünn ausgeführt oder mit einer Perforierung versehen, so dass beim Abziehen des in der Betonschicht befindlichen Stopfens 70 vom Schraubenkopf sich der oberhalb des Randes des

Schraubenkopfes befindliche Abschnitt des Stopfens 70 von dem unterhalb des Randes des Schraubenkopfes befindlichen Teil des Stopfens 70 trennt. Der Stopfen 70 reißt somit an der gestrichelten Linie, also an der Sollbruchkante 72, ab. In Fig. 7 ist die Betonschicht, die an der kegelstumpfförmigen Umfangswand des Stopfens 70 anliegt, nicht dargestellt. Die Betonschicht verhindert oder erschwert, dass der unterhalb des Schraubenkopfes befindliche Abschnitt des Stopfens 70 um den Rand des Schraubenkopfes herum zur Oberseite des Schraubenkopfes gelangen kann. Stattdessen reißt der Stopfen 70 an der Sollbruchkante 72 ab. Der oberhalb des Schraubenkopfes befindliche Abschnitt des Stopfens 70 lässt sich dadurch in einfacher Weise aus der Betonschicht entfernen. Nach dem teilweisen Entfernen des Stopfens 70 ist dann die Antriebsausbildung im Schraubenkopf von der Oberseite der Betonschicht her zugänglich und die Schraube kann ausgeschraubt werden. Eine solche Sollbruchkante 72 kann beispielsweise auch an den Stopfen 30, 40, 50, 60, 80, 90, 100, 110, 120 ,130 vorgesehen sein.

Fig. 8 zeigt einen Stopfen 80 gemäß einer achten Ausführungsform der Erfindung. Der Stopfen 80 unterscheidet sich vom Stopfen 70 der Fig. 7 lediglich dadurch, dass anstelle des Griffabschnitts 22 beim Stopfen 80 zwei Markierungsfahnen 62 vorgesehen sind, die bereits anhand des Stopfens 60 der Fig. 6 erläutert wurden.

Fig. 9 zeigt einen Stopfen 90 gemäß einer neunten Ausführungsform der Erfindung. Der Stopfen 90 unterscheidet sich vom Stopfen 40 der Fig. 4 lediglich dadurch, dass anstelle des Griffabschnitts 22 zwei Markierungsfahnen 62 von der Oberseite des Stopfens 90 ausgehen. Die Markierungsfahnen 62 wurden bereits anhand des Stopfens 60 der Fig. 6 erläutert.

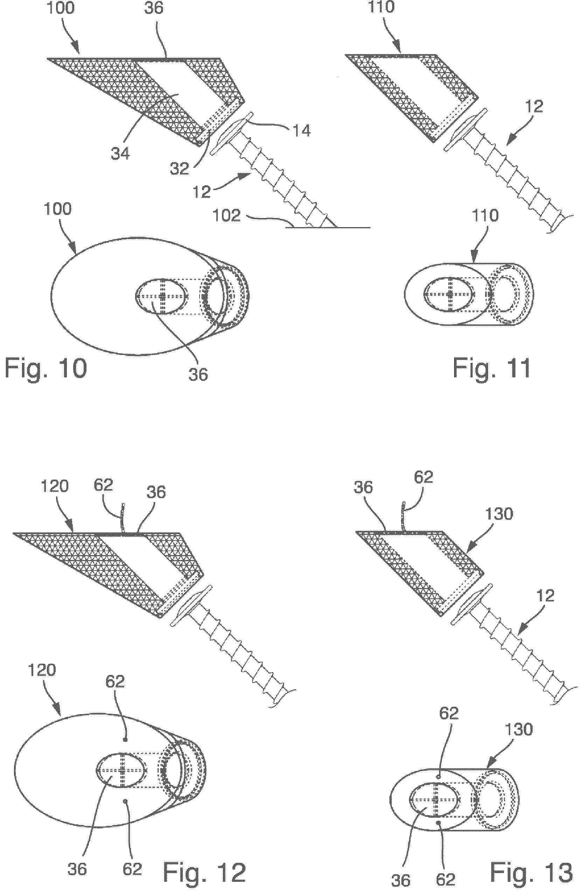

Fig. 10 zeigt einen Stopfen 100 gemäß einer zehnten Ausführungsform der Erfindung in einer Draufsicht und in einer Schnittansicht. Der Stopfen 100 unterscheidet sich vom Stopfen 30 der Fig. 3 lediglich dadurch, dass der Stopfen 100 die Form eines schräg angeschnittenen Kreiskegelstumpfs hat. Der Stopfen 100 ist dafür vorgesehen, auf den Schraubenkopf 14 der Schraube 12 aufgesetzt zu werden, wenn die Schraube 12 unter einem Winkel von 45° in ein Holzelement eingeschraubt wurde. Die Schraube 12 in Fig. 10 ist zu einem schematisch angedeuteten Holzelement 102 in einem Winkel von 45° eingeschraubt worden.

Der Stopfen 100 weist die Ausnehmung 32 auf, die einen Hinterschnitt bildet und die auf den Rand des Schraubenkopfs 14 der Schraube 12 aufgerastet wird. Wenn der Stopfen dann in die in Fig. 10 in der Schnittansicht dargestellte Position gedreht wird, ist eine Oberseite des Stopfens 100 parallel zur Oberseite des Holzelements 102. Die Oberseite des Stopfens 100 ist infolgedessen in einem Winkel von 45° zu seiner Unterseite angeordnet.

Die Ausnehmung 32 wird durch die Vertiefung 34 fortgesetzt, die an der Membran 36 endet, die die Ausnehmung 34 an der Oberseite des Stopfens 100 verschließt. Die Membran 36 ist mit einer Sollbruchstelle in Form zweier kreuzweise angeordneter Linien versehen, an denen die Materialstärke der Membran 36 verringert ist.

Der Stopfen 100 wird, wie der Stopfen 30 der Fig. 3, nach dem Eindrehen der Schraube 12 in das Holzelement 102 auf den Schraubenkopf 14 aufgesetzt. Soll die Schraube 12 aus dem Holzelement 102 und der Betonschicht des fertiggestellten Holz-Beton-Verbundelements herausgeschraubt werden, wird mit einem Schraubwerkzeug die Membran 36 durchstoßen, bis das Schraubwerkzeug in die Antriebsausbildung am Schraubenkopf 14 eingreift. Die Schraube 12 kann dann zusammen mit dem Stopfen 100 herausgeschraubt werden.

Fig. 11 zeigt einen Stopfen 110 gemäß einer elften Ausführungsform der Erfindung. Der Stopfen 110 unterscheidet sich vom Stopfen 100 der Fig. 10 lediglich durch seine Form, die nicht kegelstumpfförmig ist, wie beim Stopfen 100, sondern die Form eines unter 45° angeschnittenen Kreiszylinders hat. Die Oberseite des Stopfens 110 ist in einem Winkel von 45° zur Unterseite des Stopfens 110 angeordnet. Der Stopfen 110 ist ebenfalls zum Aufsetzen auf unter 45° in das Holzelement 102 eingedrehte Schrauben vorgesehen.

Fig. 12 zeigt einen Stopfen 120 gemäß einer zwölften Ausführungsform der Erfindung. Der Stopfen 120 unterscheidet sich vom Stopfen 100 der Fig. 10 lediglich dadurch, dass von einer Oberseite des Stopfens 120 radial außerhalb der Membran 36 zwei Markierungsfahnen 62 ausgehen. Form und Funktion der Markierungsfahnen 62 wurden bereits anhand des Stopfens 60 der Fig. 6 erläutert.

Fig. 13 zeigt einen Stopfen 130 gemäß einer dreizehnten Ausführungsform der Erfindung. Der Stopfen 130 unterscheidet sich vom Stopfen 110 der Fig. 11 lediglich dadurch, dass von seiner Oberseite, radial außerhalb der Membran 36, zwei Markierungsfahnen 62 ausgehen. Form und Funktion der Markierungsfahnen 62 wurden bereits anhand des Stopfens 60 der Fig. 6 erläutert.

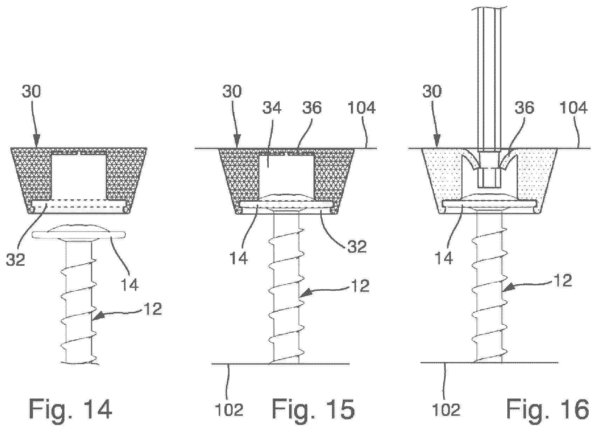

Die Fig. 14, 15 und 16 zeigen unterschiedliche Verfahrensschritte beim Herstellen und beim Rückbauen eines Holz-Beton-Verbundelements. Der Stopfen 30 ist in einer Schnittansicht in Fig. 14 in einem Zustand dargestellt, in dem er noch nicht auf den Rand des Schraubenkopfs 14 der Schraube 12, die lediglich abschnittsweise dargestellt ist, aufgerastet wurde. Gut zu erkennen ist in Fig. 14 die zweistufige Ausnehmung 32, die einen Hinterschnitt bildet. Da der Stopfen 30 aus elastischem Material, beispielsweise Gummi oder gummiartiges Material, besteht, kann der Stopfen 30 in sehr einfacher Weise auf den Rand des Schraubenkopfs 14 aufgerastet werden.

Fig. 15 zeigt den Zustand, in dem der Stopfen 30 auf den Rand des Schraubenkopfs 14 der Schraube 12 aufgerastet worden ist. Es ist zu erkennen, dass der Rand des Schraubenkopfs 14 nun innerhalb der zweiten Stufe mit größerem Durchmesser der Ausnehmung 32 angeordnet ist und dass der Rand der ersten Stufe der Ausnehmung 32 den Rand des Schraubenkopfs 14 umgreift und im äußersten Randabschnitt der Unterseite des Schraubenkopfs 14 an der Unterseite anliegt. Der Stopfen 30 ist dadurch sicher, aber dennoch lösbar an dem Schraubenkopf 14 fixiert.

Die Membran 36 verschließt den Hohlraum 34 zur Oberseite des Stopfens 30 hin. Wird nun im Zustand der Fig. 15 eine Betonschicht 104 auf das Holzelement 102 aufgebracht, so wird so viel Beton aufgebracht, dass eine Oberseite der Betonschicht 104 bündig oder fluchtend angeordnet ist mit der Oberseite des Stopfens 30. Selbst wenn während des Aufbringens der Betonschicht flüssiger Beton auf die Oberseite des Stopfens 30 gelangen sollte, so ist der Hohlraum 34 zuverlässig gegen das Eindringen von flüssigem Beton abgedichtet. Zur Unterseite des Stopfens hin sorgt der sichere Sitz des Schraubenkopfs 14 in der Ausnehmung 32 für eine Abdichtung. Zur Oberseite hin dichtet die Membran 36 den Hohlraum 34 ab. Dadurch ist sichergestellt, dass während des Aufbringens der Betonschicht 104 kein flüssiger Beton auf den Schraubenkopf 14 und in die Antriebsausbildung des Schraubenkopfs 14 gelangen kann. Die Schraube ist abschnittsweise in ein Holzelement 102, beispielsweise eine Holzdecke eingeschraubt worden. Zwischen einer Oberseite des Holzelements 102 und der Unterseite des Schraubenkopfes 14 liegt ein Abstand. Die Oberseite einer Betonschicht 104, die nach dem Eindrehen der Schraube 12 in das Holzelement und nach dem Aufsetzen des Stopfens 30 auf die Schraube 12 aufgebracht wird, ist in Fig. 15 angedeutet. Flüssiger Beton wird auf das Holzelement 102 aufgebracht, bis eine Oberseite der Betonschicht 104 bündig mit der Oberseite des Stopfens 30 ist. Nach dem verfestigen der Betonschicht 104 ist das Holz-Beton-Verbundelement fertiggestellt und belastbar. Das Holz-Beton-Verbundelement kann vor Ort auf der Baustelle hergestellt werden, es kann aber auch in einer Fabrik vorgefertigt oder fertiggestellt und dann auf eine Baustelle gebracht werden.

Fig. 16 zeigt ein fertiggestelltes Holz-Beton-Verbundelement mit dem schematisch angedeuteten Holzelement 102, in das die Schraube 12 eingeschraubt wurde und mit der Betonschicht 104, die den Schraubenschaft umgibt und die sich bis zur Oberseite des Stopfens 30 erstreckt.

Um das Holz-Beton-Verbundelement zurückzubauen, wird die Membran 36 mit einem Schraubwerkzeug, hier mit einem Schrauberbit, durchstoßen, so dass das Schraubwerkzeug in die Antriebsausbildung im Schraubenkopf 20 eingesetzt werden kann. Die Schraube 12 kann nun durch Drehung des Schraubwerkzeugs aus dem Holzelement 102 und aus der Betonschicht 104 herausgeschraubt werden. Der Stopfen 30 wird beim Ausschrauben der Schraube 12 gleichzeitig mit aus der Betonschicht 104 herausbewegt. Die Kegelstumpfform des Stopfens 30 erleichtert das Entfernen des Stopfens 30 aus der Betonschicht 104.

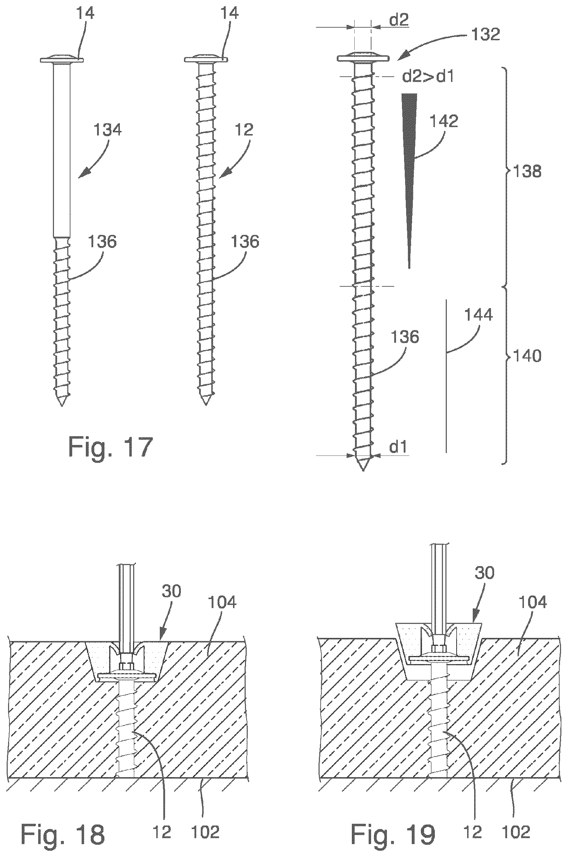

Fig. 17 zeigt die Schraube 12 in einer Seitenansicht sowie zwei weitere Schrauben 132 und 134. Alle Schrauben 12, 132, 134 sind zum Herstellen eines Holz-Beton-Verbundelements geeignet und weisen jeweils einen Schraubenkopf 14 mit einer Antriebsausbildung sowie ein Befestigungsgewinde 136 auf. Die Schraube 12 ist als Vollgewindeschraube ausgebildet und das Befestigungsgewinde 136 erstreckt sich von einer Spitze der Schraube bis zur Unterseite des Schraubenkopfs 14.

Die Schraube 132 weist gegenüber der Schraube 12 eine andere Gestaltung des Schafts auf. Der Schaft der Schraube ist in einem ersten Abschnitt 138, der unmittelbar unterhalb des Schraubenkopfes beginnt, kegelstumpfförmig ausgebildet und verjüngt sich in einer Richtung vom Schraubenkopf zur Schraubenspitze. Unmittelbar unterhalb des Schraubenkopfes hat der Schaft einen Durchmesser d2 und dieser Durchmesser d2 verjüngt sich stufenförmig bis zum Ende des Abschnitts 138 auf den Durchmesser d1, der kleiner ist als der Durchmesser d2. Dies ist durch die symbolische Darstellung 142 verdeutlicht. Der Abschnitt 140 des Schafts beginnt am Ende des Abschnitts 138 und geht bis zur Schraubenspritze. Im Abschnitt 140 bleibt der Außendurchmesser des Schafts mit Ausnahme des Bereichs der sich verjüngenden Schraubenspitze, konstant auf einem Wert d1. Dies ist durch den symbolischen Strich 144 mit konstanter Strichstärke angedeutet. Im verbauten Zustand in einem Holz-Beton-Verbundelement ist der Abschnitt 138 in der Betonschicht und der Abschnitt 140 in dem Holzelement des Holz-Beton-Verbundelements angeordnet. Auch die Schraube 132 ist als Vollgewindeschraube ausgebildet und das Befestigungsgewinde 136 erstreckt sich von einer Spitze der Schraube bis zur Unterseite des Schraubenkopfs 14. Im Rahmen der Erfindung kann der sich zumindest abschnittsweise verjüngende Schaft auch an einer Teilgewindeschraube vorgesehen werden.

Die Schraube 134 weist ein Befestigungsgewinde 136 auf, das sich nicht bis zur Unterseite des Schraubenkopfs 14, sondern von der Spitze der Schraube aus lediglich bis etwa zur Hälfte der Länge des Schafts der Schraube 134 erstreckt. Vom schraubenkopfseitigen Ende des Befestigungsgewindes 136 aus bis zur Unterseite des Schraubenkopfs 14 ist der Schaft der Schraube 134 glatt. Ein Außendurchmesser im glatten Abschnitt des Schafts ist größer oder gleich dem Außendurchmesser des Schafts im Bereich des Befestigungsgewindes 136. Dadurch lässt sich die Schraube in einfacher Weise aus einem fertiggestellten Holz-Beton-Verbundelement herausschrauben, wenn dieses zurückgebaut werden soll.

Fig. 18 zeigt abschnittsweise ein Holz-Beton-Verbundelement mit einem Holzelement 102, beispielsweise einer Holzdecke, einer in das Holzelement 102 eingedrehten Schraube 12, den auf den Kopf der Schraube 12 aufgesetzten Stopfen 30 und die Betonschicht 104, die sich von der Oberseite des Holzelements 102 bis zur Oberseite des Stopfens 30 erstreckt.

Dargestellt ist in Fig. 18 ein Zustand, der nach dem anhand der Fig. 16 erläuterten Zustand folgt. Das Schraubwerkzeug ist nun so weit in den Stopfen 30 eingeführt worden, dass das Schraubwerkzeug in die Antriebsausbildung der Schraube 12 eingreift.

Fig. 19 zeigt einen Zustand, in dem die Schraube 12 bereits ein Stück weit aus dem Holzelement 102 und der Betonschicht 104 herausgeschraubt wurde. Dies geschieht durch Drehung des Schraubwerkzeugs im Gegenuhrzeigersinn. Es ist Fig. 19 zu entnehmen, dass gleichzeitig mit der Schraube 12 auch der unverändert auf dem Schraubenkopf der Schraube 12 aufgerastete Stopfen 30 mit aus der Betonschicht 104 herausgedreht wird. In der Betonschicht 104 verbleibt eine kegelstumpfförmige Ausnehmung und eine sich bis zum Holzelement 102 erstreckende Bohrung, wenn die Schraube 12 vollständig aus dem Holzelement 102 und der Betonschicht 104 herausgeschraubt worden ist.

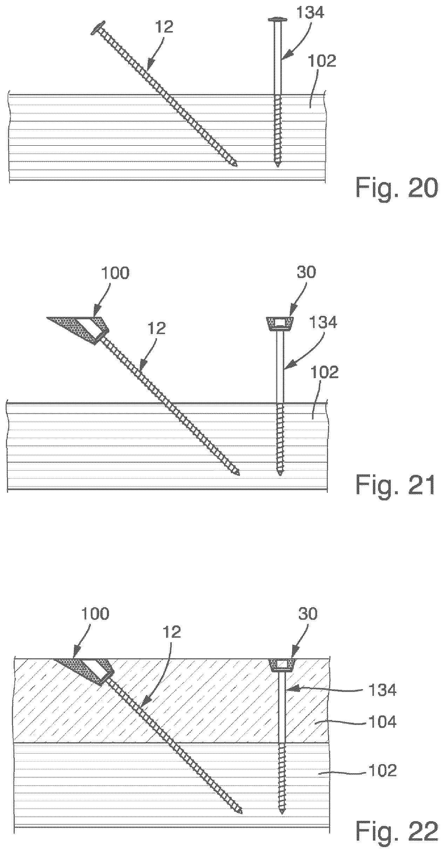

Die Fig. 20 bis 22 zeigen drei Schritte beim Herstellen eines erfindungsgemäßen Holz-Beton-Verbundelements.

Im Zustand der Fig. 20 ist die Schraube 134, die bereits anhand der Fig. 17 erläutert wurde, so weit in das Holzelement 102 eingeschraubt worden, dass das Befestigungsgewinde 136 vollständig innerhalb des Holzelements 102 angeordnet ist und lediglich der glatte Abschnitt des Schafts und der Schraubenkopf oberhalb des Holzelements 102 angeordnet sind. Die Schraube 134 wurde senkrecht in die Oberseite des Holzelements 102 eingeschraubt.

Die Schraube 12 wurde unter einem Winkel von 45° zur Oberseite des Holzelements 102 in das Holzelement 102 eingeschraubt.

In Fig. 21 wurde auf den Kopf der Schraube 134 der Stopfen 30 aufgesetzt, der bereits anhand der Fig. 3 sowie der Fig. 14, 15, 16, 18 und 19 erläutert wurde. Auf den Kopf der schräg eingeschraubten Schraube 12 wurde der Stopfen 100 aufgesetzt, der bereits anhand der Fig. 10 erläutert wurde.

Die Oberseite des Stopfens 100, der die Form eines schräggeschnittenen Kreiskegelstumpfes hat, und die Oberseite des Stopfens 30, der die Form eines Kreiskegelstumpfes hat, sind im Zustand der Fig. 21 fluchtend zueinander angeordnet. Um die Position der Oberseite des Stopfens 100 zu korrigieren, kann der Stopfen 100 gegebenenfalls von der Schraube 12 abgenommen werden und die Schraube kann ein Stück weiter in das Holzelement 102 eingeschraubt oder aus dem Holzelement 102 herausgeschraubt werden. Zweckmäßigerweise dienen zum Einschrauben der Schraube 12 sowie gegebenenfalls auch zum Einschrauben der Schraube 134 Hilfsmittel, die das Einhalten einer vordefinierten Einschraubtiefe für die Schrauben 134 und 12 ermöglichen.

Fig. 22 zeigt das fertiggestellte Holz-Beton-Verbundelement. Auf die Oberseite des Holzelements 102 wurde nun die Betonschicht 104 aufgebracht, wobei so viel flüssiger Beton aufgebracht wurde, dass die Oberseite der Betonschicht 104 mit den Oberseiten der Stopfen 100 und 30 fluchtet.

Schubkräfte können nun zwischen der Betonschicht 104 und dem Holzelement 102 dadurch übertragen werden, dass die Betonschicht 104 sowohl Abschnitte der Schäfte der Schrauben 12, 134 umgibt und auch an der Unterseite der Köpfe der Schrauben 12, 134 angreift. Gleichzeitig verhindern die Schrauben 12, 134, dass die Betonschicht 104 vom Holzelement 102 abhebt.

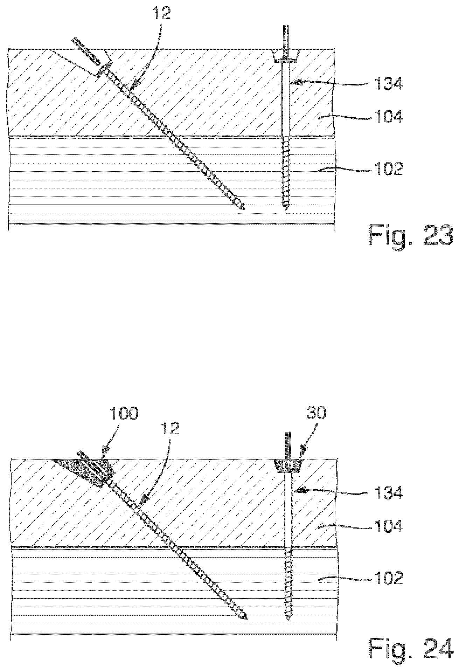

Fig. 23 zeigt das Holz-Beton-Verbundelement der Fig. 22 in einem Zustand, in dem die beiden Stopfen 100, 30 bereits entfernt wurden und damit sowohl der Kopf der Schraube 12 als auch der Kopf der Schraube 134 von der Oberseite der Betonschicht 104 her zugänglich sind. Nach dem Entfernen der Stopfen 100, 30 ist die Oberseite des Kopfs der Schraube 12 über eine Ausnehmung in Form eines schräg abgeschnittenen Kreiskegelstumpfes zugänglich und die Oberseite des Kopfs der Schraube 134 ist über eine Ausnehmung in der Betonschicht 104 in Form eines Kreiskegelstumpfes zugänglich. In Fig. 23 sind Schraubwerkzeuge eingezeichnet, die in die Antriebsausbildungen der Schrauben 12, 134 eingesetzt werden können, um die Schrauben 12, 134 sowohl aus dem Holzelement 102 als auch aus der Betonschicht 104 herauszuschrauben.

Nach dem Entfernen der Schrauben 12, 134 kann beim Rückbau des Holz-Beton-Verbundelements der Fig. 23 die Betonschicht 104 vom Holzelement 102 entfernt werden. Insgesamt ist eine einfache Trennung der Bestandteile des Holz-Beton-Verbundelements aus unterschiedlichen Materialien möglich, nämlich die aus Gummi oder gummiartigem Material bestehenden Stopfen 100, 30, die aus Metall bestehenden Schrauben 12, 134, die Betonschicht 104 und das Holzelement 102.

Fig. 24 zeigt einen Schritt beim Rückbau des Holz-Beton-Verbundelements der Fig. 22 in einem Zustand, in dem darauf verzichtet wurde, zunächst die Stopfen 100, 30 zu entfernen. Mit einem Schraubwerkzeug wurde jeweils die Membran 36 der Stopfen 100, 30 durchstoßen und dadurch kann das Schraubwerkzeug in die Antriebsausbildung am Kopf der Schrauben 12, 134 eingreifen. Die Schrauben 12, 134 werden dann zusammen mit den Stopfen 100, 30 aus dem Holzelement 102 und der Betonschicht 104 entfernt.

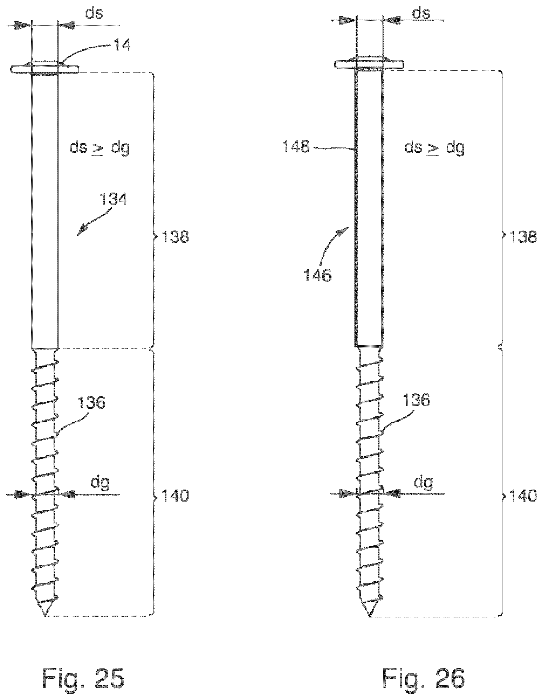

Fig. 25 zeigt die Schraube 134 der Fig. 17 in vergrößertem Maßstab. Unterhalb des Schraubenkopfs 14 ist der erste Abschnitt 138 des Schafts der Schraube 134 angeordnet, der glatt ist. In diesem Abschnitt 138 des Schafts der Schraube hat der Schaft einen Durchmesser ds. Im Abschnitt 138 ist der Schaft der Schraube zylindrisch.

An den Abschnitt 138 schließt sich der weitere Abschnitt 140 des Schafts der Schraube mit dem Befestigungsgewinde 136 an. Mit Ausnahme der sich verjüngenden Schraubenspitze ist der Schaft im Abschnitt 140 zylindrisch beziehungsweise weist einen konstanten Außendurchmesser dg auf. Die Schraube 134 ist so ausgebildet, dass der Durchmesser ds größer-gleich ist wie der Durchmesser dg. Im Abschnitt 138 ist in einem Holz-Beton-Verbundelement der Schaft der Schraube von der Betonschicht umschlossen. Im Abschnitt 140 ist die Schraube 134 in das Holzelement des Holz-Beton-Verbundelements eingeschraubt. Wenn nun der Durchmesser ds größer ist als oder gleich groß ist wie der Durchmesser dg, so hinterlässt beim Ausschrauben der Schraube 14 aus der Betonschicht der Abschnitt 138 einen Kanal in der Betonschicht, durch den sich auch der Abschnitt 140 des Schafts mit dem Befestigungsgewinde 136 herausschrauben lässt.

Bei der in Fig. 25 dargestellten Schraube sind die Abschnitte 138 und 140 in etwa gleich lang. Hiervon kann im Rahmen der Erfindung abgewichen werden.

Fig. 26 zeigt eine weitere erfindungsgemäße Schraube 146, die im Bereich des Abschnitts 138 mit einer Umhüllung 148 des Schafts der Schraube versehen ist. Diese Umhüllung 148 ist als zylindrisches Rohr ausgebildet und auf den Schaft im Abschnitt 138 aufgeschoben oder in sonstiger Weise aufgebracht, beispielsweise aufgesprüht oder durch Eintauchen aufgebracht. Die Umhüllung 148 kann als Metallbeschichtung, als Metallrohr, als Kunststoffrohr oder auch als Kunststoffschicht oder sonstige Schicht ausgebildet sein. Sinn und Zweck der Umhüllung 148 ist, den Außendurchmesser ds des Schafts im Bereich 138 auf einen größeren Wert zu bringen, so dass der Außendurchmesser ds größer ist als oder gleich groß ist wie der Außendurchmesser dd in dem Abschnitt 140 des Schafts der Schraube 148. Im Abschnitt 140 ist der Schaft der Schraube mit dem Befestigungsgewinde 136 versehen.

In einem Holz-Beton-Verbundelement ist der Abschnitt 140 der Schraube 148 in ein Holzelement eingeschraubt und der Abschnitt 138 der Schraube ist in eine Betonschicht eingebettet. Wird nun die Schraube 148 aus dem Holz-Beton-Verbundelement herausgeschraubt, so hinterlässt der Abschnitt 138 einen Kanal in der Betonschicht, dessen Innendurchmesser größer ist als oder gleich groß ist wie der Außendurchmesser dg des Schafts der Schraube im Abschnitt 140. Die Schraube 148 lässt sich dadurch aus dem Holz-Beton-Verbundelement herausschrauben.

## Patentansprüche

1. Stopfen zur Verwendung in einem Holz-Beton-Verbundelement, wobei der Stopfen zum Aufsetzen auf den Kopf einer Schraube vorgesehen ist, die zum Einschrauben in ein Holzelement des Holz-Beton-Verbundelements vorgesehen ist, **dadurch gekennzeichnet, dass** der Stopfen ausgebildet ist, einen Rand eines Schraubenkopfes wenigstens abschnittsweise zu umgreifen und/oder dass der Stopfen ausgebildet ist, an einer Antriebsausbildung der Schraube anzugreifen, wobei insbesondere der Stopfen ausgebildet ist, einen Rand eines Schraubenkopfes wenigstens abschnittsweise zu umgreifen, wobei der Stopfen eine Ausnehmung mit einem wenigstens abschnittsweise hinterschnittenen Rand zum Aufnehmen des Rands des Schraubenkopfes aufweist.

2. Stopfen nach Anspruch 1, **dadurch gekennzeichnet, dass** der Stopfen in einer Wand der Ausnehmung eine umlaufende Sollbruchkante aufweist, wobei insbesondere die Sollbruchkante benachbart zu dem hinterschnittenen Rand zum Aufnehmen des Rands des Schraubenkopfes angeordnet ist.

3. Stopfen nach einem der vorstehenden Ansprüche, **dadurch gekennzeichnet, dass** der Stopfen ausgebildet ist, an einer Antriebsausbildung der Schraube anzugreifen, wobei der Stopfen einen Zapfen aufweist, der in eine Antriebsausbildung der Schraube eingesteckt werden kann.

4. Stopfen nach einem der vorstehenden Ansprüche, **dadurch gekennzeichnet, dass** der Stopfen eine Länge aufweist, die so bemessen ist, dass sich der Stopfen im fertiggestellten Holz-Beton-Verbundelement bis zu einer Oberseite einer Betonschicht des Holz-Beton-Verbundelements erstreckt.

5. Stopfen nach einem der vorstehenden Ansprüche, **dadurch gekennzeichnet, dass** der Stopfen einstückig und aus elastischem Material, insbesondere Gummi oder gummiartiges Material, ausgebildet ist.

6. Stopfen nach wenigstens einem der vorstehenden Ansprüche, **dadurch gekennzeichnet, dass** der Stopfen zylindrisch oder kegelstumpfförmig ausgebildet ist, wobei insbesondere eine Oberseite des Stopfens schräg zu einer Unterseite angeordnet ist, insbesondere dass der Stopfen die Form eines schräg angeschnittenen Kreiszylinders oder eines schräg angeschnittenen Kreiskegelstumpfes aufweist.

7. Stopfen nach wenigstens einem der vorstehenden Ansprüche, **dadurch gekennzeichnet, dass** der Stopfen eine Durchgangsöffnung oder eine Ausnehmung aufweist, wobei in einem auf eine Schraube aufgesetzten Zustand des Stopfens eine Antriebsausbildung der Schraube durch die Durchgangsöffnung beziehungsweise durch die Ausnehmung zugänglich ist.

8. Stopfen nach Anspruch 7, **dadurch gekennzeichnet, dass** ein Stöpsel oder eine Kappe vorgesehen sind, um die Durchgangsöffnung oder die Ausnehmung zu verschließen, oder dass eine Eingangsöffnung der Durchgangsöffnung oder der Ausnehmung mittels einer Sollbruchstelle und/oder einer Membran verschlossen ist.

9. Stopfen nach wenigstens einem der vorstehenden Ansprüche, **dadurch gekennzeichnet, dass** der Stopfen als Hohlkörper aufgebaut ist und/oder dass von einer Oberseite des Stopfens wenigstens eine Markierungsfahne oder ein Griffabschnitt ausgeht, die beziehungsweise der sich im eingebauten Zustand über eine Oberseite der Betonschicht hinauserstreckt.

10. Stopfen nach wenigstens einem der vorstehenden Ansprüche mit einer Schraube zum Einschrauben in das Holzelement des Holz-Beton-Verbundelements, wobei der Schaft der Schraube sich vom Schraubenkopf ausgehend in Richtung auf eine Schraubenspitze wenigstens in einem Abschnitt, der in der Betonschicht des Holz-Beton-Verbundelements angeordnet ist, verjüngt und/oder dass ein Außendurchmesser des Schafts der Schraube in einem Abschnitt des Schafts der Schraube, der in der Betonschicht des Holz-Beton-Verbundelements angeordnet ist, größer oder gleich ist zu einem Außendurchmesser eines Abschnitts des Schafts der Schraube, der in dem Holzelement des Holz-Beton-Verbundelements angeordnet ist.

11. Holz-Beton-Verbundelement, insbesondere eine Holz-Beton-Verbunddecke, mit einem Holzelement, wenigstens einer in das Holzelement eingedrehten Schraube, einem auf einen Schraubenkopf der Schraube aufgesetzten Stopfen nach wenigstens einem der vorstehenden Ansprüche und einer Betonschicht, die auf einer Oberseite des Holzelements aufliegt und die sich über einen Kopf der Schraube hinauserstreckt, **dadurch gekennzeichnet, dass** an dem Kopf der Schraube der Stopfen befestigt ist, wobei ein Außendurchmesser des Stopfens bis zu einer Oberseite des Stopfens größer ist als oder gleich groß ist wie ein Außendurchmesser des Schraubenkopfes und wobei sich der Stopfen bis zu einer Oberseite der Betonschicht erstreckt, wobei insbesondere von einer Oberseite des Stopfens, die von einem Kopf der Schraube abgewandt ist, eine Markierungsfahne oder ein Griffabschnitt ausgeht, die beziehungsweise der sich über eine Oberseite der Betonschicht hinauserstreckt.

12. Holz-Beton-Verbundelement nach Anspruch 11, **dadurch gekennzeichnet, dass** der Stopfen eine Durchgangsöffnung oder eine Ausnehmung aufweist, wobei durch die Durchgangsöffnung oder die Ausnehmung eine Antriebsausbildung der Schraube zugänglich ist und wobei eine Eingangsöffnung der Durchgangsöffnung oder Ausnehmung, die in der Oberseite des Stopfens angeordnet ist, bündig zu einer Oberseite der Betonschicht angeordnet ist.

13. Holz-Beton-Verbundelement nach Anspruch 12, **dadurch gekennzeichnet, dass** die Eingangsöffnung der Durchgangsöffnung oder Ausnehmung mittels einer Kappe oder einem Stöpsel verschlossen ist oder dass die Eingangsöffnung der Durchgangsöffnung oder Ausnehmung mit einer Sollbruchstelle oder einer Membran versehen ist.

14. Verfahren zum Herstellen eines Holz-Beton-Verbund-Elements nach einem der Ansprüche 11 bis 13, **gekennzeichnet durch** folgende Schritte: Eindrehen wenigstens einer Schraube in eine Oberseite eines Holzelements, insbesondere einer Holzdecke, des Holz-Beton-Verbundelements, Aufsetzen eines Stopfens auf einen Schraubenkopf der wenigstens einen Schraube und Aufbringen einer Betonschicht auf eine Oberseite des Holzelements, so dass sich die Betonschicht bis zu einer Oberseite des Stopfens erstreckt.

15. Verfahren zum Rückbauen eines Holz-Beton-Verbundelements nach einem der Ansprüche 11 bis 13, **gekennzeichnet durch** folgende Schritte: Ausdrehen wenigstens einer Schraube aus dem Holzelement des Holz-Beton-Verbundelements nach dem Entfernen des Stopfens aus der Betonschicht und von dem Schraubenkopf der Schraube, Ausdrehen der wenigstens einen Schraube aus dem Holzelement und gleichzeitiges Entfernen des Stopfens aus der Betonschicht oder Ausdrehen der wenigstens einen Schraube durch die Durchgangsöffnung des Stopfens hindurch und nachfolgend Entfernen des Stopfens aus der Betonschicht und nach dem Ausdrehen der Schraube und dem Entfernen des Stopfens aus der Betonschicht Trennen der Betonschicht von dem Holzelement.
